# EUROPÄISCHE PATENTSCHRIFT

(11) **EP 1 144 087 B1**
(45) Veröffentlichungstag und Bekanntmachung des Hinweises auf die Patenterteilung: **21.05.2003**
(21) Anmeldenummer: 99942913.7
(22) Anmeldetag: 25.08.1999
(51) Int. Cl.: B01D 53/46, B01D 53/86, A23L 3/3409, A61L 2/20

(54) **ADSORPTIONSMASSE FÜR PHOSPHIN**
ADSORBENT MASS FOR PHOSPHINE
MASSE D'ADSORPTION POUR DE LA PHOSPHINE

(30) Priorität: 08.10.1998 DE 19846284
(43) Veröffentlichungstag der Anmeldung: 17.10.2001
(73) Patentinhaber: Messer Griesheim GmbH, 65933 Frankfurt am Main (DE)
(72) Erfinder: WILDE, Jürgen, D-47137 Duisburg (DE)
(86) Internationale Anmeldenummer: EP9906221
(87) Internationale Veröffentlichungsnummer: WO00021644

(56) Entgegenhaltungen:
- DE-A- 3 802 496
- US-A- 4 966 755
- US-A- 5 482 536
- US-A- 5 531 971
- US-A- 5 565 178

## Beschreibung

Die Erfindung betrifft ein Verfahren zur Entfernung von Phosphin aus phosphinhaltigen Gasen, eine Vorrichtung zur Begasung von durch Schädlinge befallene Güter mit einer Einrichtung zur Reinigung der Abluft und eine Verwendung eines Filters oder Adsorbers, enthaltend mit Schwefel imprägnierte Aktivkohle.

Bei der Herstellung, Lagerung und Transport von Nahrungs- und Genußmitteln werden toxische Gase, insbesondere Phosphin, eingesetzt, um Schädlinge zu vernichten. Nach Ablauf der Einwirkungszeit gelangt das Begasungsmittel unbehandelt in die Atmosphäre.

Der Erfindung liegt die Aufgabe zugrunde, ein bei Raumtemperatur wirksames Adsorptionsmittel für Phosphin aus phosphinhaltigen Gasen bereitzustellen.

Es ist bekannt, Phosphin aus phosphinhaltigen Gasen mit Aktivkohle (ohne Nennung einer Imprägnierung) zu entfernen (US 4966755 A). Weiter ist aus US 5482536 A bekannt, Leckagegase (u.a. Phosphin) mit verschiedenen Adsorbentien, u.a. mit imprägnierter Aktivkohle (Alkalimetallhydroxide, Kupferoxide) zu entfernen.

Es wurde gefunden, daß mit elementarem Schwefel imprägnierte Aktivkohle bereits bei Raumtemperatur sehr gut geeignet ist, Phosphin aus phosphinhaltigen Gasen quantitativ zu entfernen.

Gelöst wurde die Aufgabe somit durch ein Verfahren zur Entfernung von Phosphin (Phosphorwasserstoff, chemische Formel PH₃) aus phosphinhaltigen Gasen, wobei mit Schwefel imprägnierte Aktivkohle mit dem phosphinhaltigen Gas in Kontakt gebracht wird.

Das Verfahren gemäß der Erfindung eignet sich besonders vorteilhaft zur Entfernung von Phosphin aus der Abluft, die bei der Verwendung von phosphinhaltigen gasförmigen Schädlingsbekämpfungsmitteln entsteht.

Mit elementarem Schwefel imprägnierte Aktivkohle eignet sich besonders vorteilhaft als Adsorbermasse (Adsorbens) oder Filtermasse zur Entfernung von Phosphin aus Gasgemischen (Gasen).
Die imprägnierte Aktivkohle enthält im allgemeinen 1 bis 25 Gew.-% elementaren Schwefel, vorzugsweise 10 bis 25 Gew.-% elementaren Schwefel und besonders bevorzugt 15 bis 20 Gew.-% elementaren Schwefel. Eine gut geeignete Aktivkohle, die mit 20 Gew.-% Schwefel dotiert ist, ist im Handel erhältlich.

Ein übliches gasförmiges Schädlingsbekämpfungsmittel ist beispielsweise ein Gasgemisch aus Stickstoff mit 1,7 Vol.-% Phosphin.

Ein weiterer Gegenstand der Erfindung ist eine Vorrichtung gemäß den Merkmalen von Anspruch 5.

Die Begasung mit den gasförmigen Schädlingsbekämpfungsmitteln erfolgt beispielsweise in stationären Begasungskammern, Containern, Schiffen oder unter geeigneten Abdeckungen direkt in Lagerhallen.

Nach Ablauf der Einwirkungszeit strömt die mit dem gasförmigen Schädlingsbekämpfungsmittel angereicherte Abluft durch einen (alternativ: zwei in Reihe geschaltete) Behälter (z. B. Filterpatrone) mit der schwefel-imprägnierten Aktivkohle als Adsorbens, vorzugsweise eine hochimprägnierte Aktivkohle wie Aktivkohle mit 20 Gew.-% Schwefel. Das Adsorbens ermöglicht eine quantitative Entfernung von Phosphin aus der Abluft. Eine quantitative Entfernung bedeutet, daß das Phosphin auf eine Konzentration von weniger als 1 mg Phosphin pro m³ Abluft reduziert wird.

Die Begasung mit dem phosphinhaltigen Gas erfolgt vorteilhaft in einem Begasungsraum oder einer Begasungskammer mit Umluftbetrieb. Zur Entfernung des Phosphins wird beispielsweise die Gasatmosphäre über ein Sauggebläse durch den Adsorber abgesaugt und in den Begasungsraum zurückgeführt bis die abgesaugte Gasatmosphäre kein Phosphin mehr enthält.

Neben Umweltaspekten bietet das Verfahren folgende Vorteile:
- Nach Ende der Begasung kann das Begasungsgut schneller freigegeben werden.
- Durch die gezielte Abgasbehandlung können Begasungen mit hoher Sicherheit vorgenommen werden.
- Einfache Entsorgung des verbrauchten oder beladenen Adsorbens durch Verbrennen.

Das Verfahren erfüllt alle Anforderungen: Einhaltung der TA Luft, geringe Kosten, Betrieb und Wartung ohne qualifiziertes Personal, einfacher Aufbau für mobilen Einsatz, keine Hilfsenergien (außer Strom).

Die Erfindung wird anhand von Fig. 1 bis 3 erläutert.

Fig. 1 zeigt eine Versuchsanlage zur Messung der Wirksamkeit des Adsorbens.

Fig. 2 zeigt ein Schema für eine Anlage zur Begasung von durch Schädlinge befallenen Gutem mit PH₃-Adsorbern.

Fig. 3 zeigt den typischen Verlauf der Phosphinkonzentration C_{PH3} im Begasungraum in Abhängigkeit von der Zeit t bei dem Betrieb einer Anlage gemäß Fig. 2.

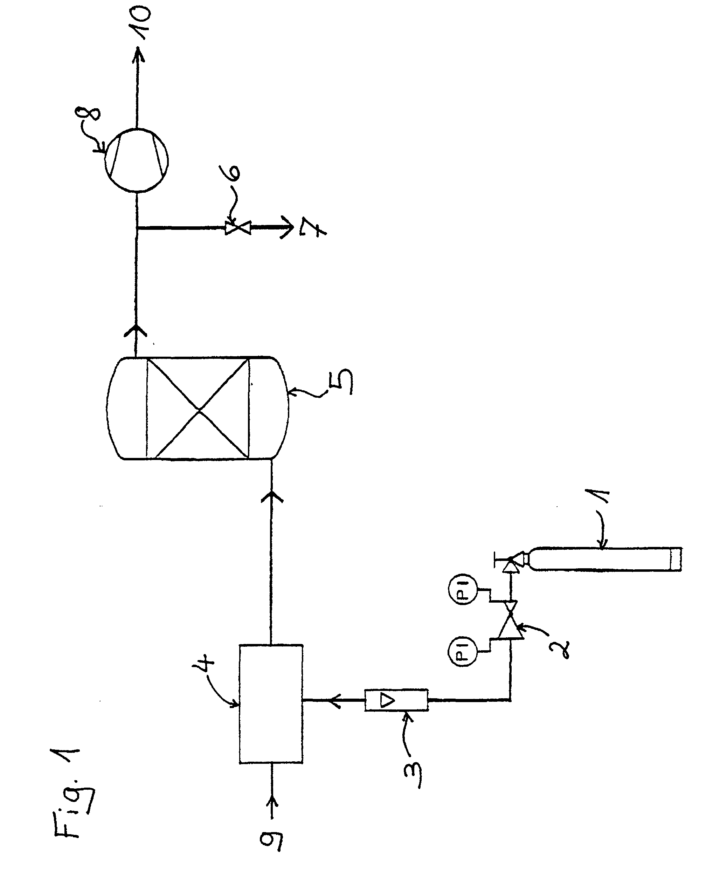

Die Wirksamkeit der Entfernung von Phosphin aus einem Gasgemisch mittels unbehandelter Aktivkohle (Aktivkohle; Firma FWS Filter- und Wassertechnik GmbH, Niederlassung West, Siemensstraße 1a, 50354 Hürth) und schwefelimprägnierter Aktivkohle (Aktivkohle, dotiert mit 20 Gewichtsprozent Schwefel; Firma FWS Filter- und Wassertechnik GmbH, s. o.) wurde anhand der in Fig. 1 gezeigten Versuchsanlage ermittelt. Aus einer Druckgasflasche 1 wird ein Gasgemisch von 1 Vol.-% PH₃ in Stickstoff entnommen und über einen Druckminderer 2 und eine Gasleitung mit Gasdurchflußmesser 3 einer Mischeinrichtung 4 zugeführt. Die Mischeinrichtung 4 ist beispielsweise eine Mischstrecke mit Einbauten zur Verwirbelung der Gase. Das Phosphin-Gasgemisch und Luft 9 aus der Umgebung werden so in die Mischeinrichtung dosiert, daß ein Gasgemisch mit 500 ppm PH₃ entsteht. Das gebildete Gasgemisch wird mit einem Volumenstrom von 200 Nm³/h (Normkubikmeter pro Stunde) einem Adsorber 5 zugeführt. Der Adsorber 5 hat ein Fassungsvolumen von 200 Liter und ist mit dem zu prüfenden Adsorbens gefüllt (Schüttung). Der Gasstrom, der durch den Adsorber geführt wird, wird durch ein Sauggebläse 8 erzeugt. Das aus dem Adsorber ausströmende Gas wird über eine Entnahmeleitung mit Absperrventil 6 einer Analyseeinrichtung 7 (z. B. IR-Spektrometer oder Massenspektrometer) zugeführt. Vom Gebläse 8 führt eine Leitung zur Abluft 10. Die Versuchsergebnisse sind in der Tabelle aufgeführt Es zeigt sich, daß unbehandelte Aktivkohle gegenüber Phosphin praktisch unwirksam ist. Dagegen zeigt der Versuch mit schwefelimprägnierter Aktivkohle, daß Phosphin bis unter die Nachweisgrenze aus dem Gasstrom entfernt wird.

**Tabelle:**

| Versuchsergebnisse | | |
|---|---|---|
| Adsorber-Füllung | PH₃-Konzentration vor Adsorber | PH₃-Konzentration nach Adsorber |
| Aktivkohle, unbehandelt | 500 ppm | 500 ppm |
| Aktivkohle, dotiert mit 20 Gew.-% S | 500 ppm | < 0,01 ppm |
| ppm = 1 Volumenteil pro 10⁶ Volumenteile | | |

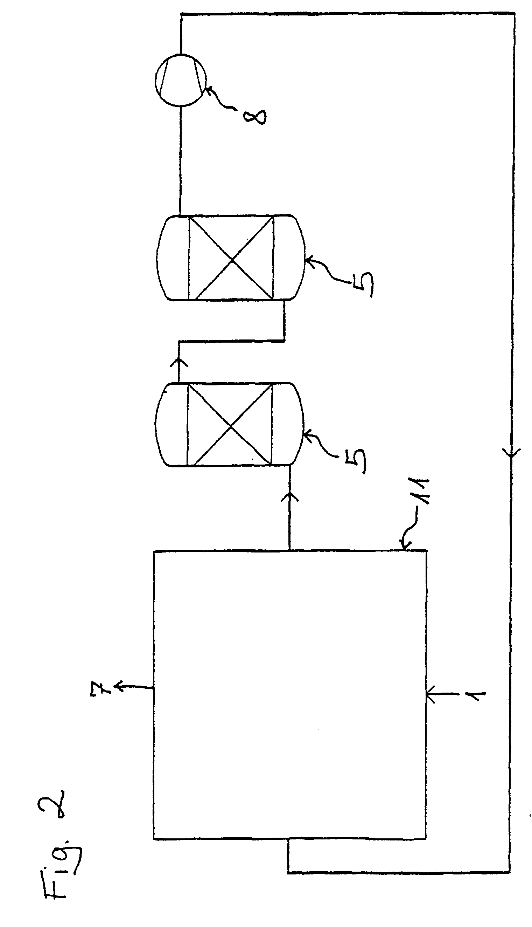

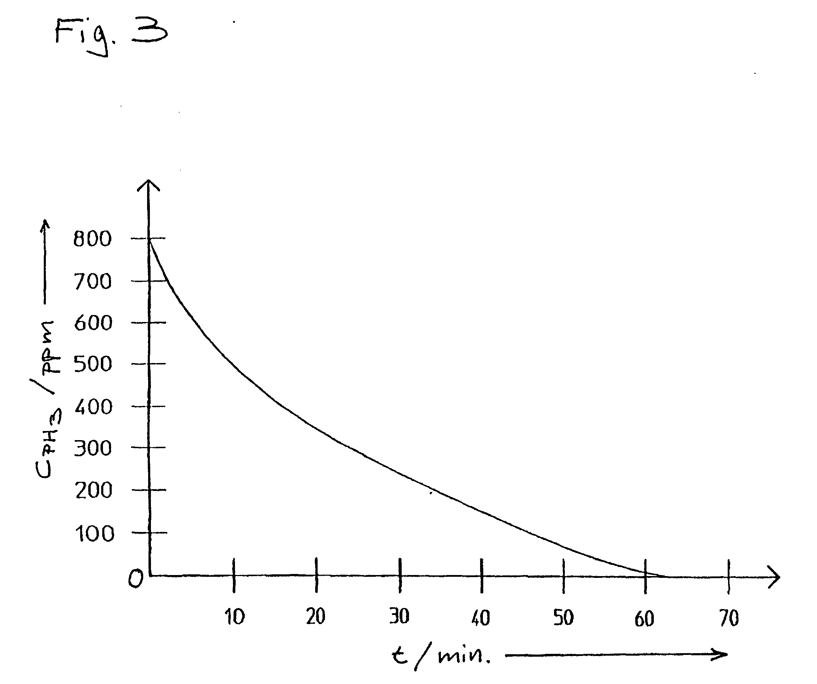

Das Beispiel einer Begasungsanlage in Fig. 2 zeigt einen Begasungsraum 11 mit einem Rauminhalt von 50 m³. In dem Begasungsraum 11 wird zu Beginn der Begasung eine Gasatmosphäre mit einem Phosphingehalt von 800 ppm erzeugt. Zur Erzeugung der Gasatmosphäre mit Phosphin wird einer Gasquelle 1 ein Phosphin-Muttergasgemisch entnommen. Die Phosphinkonzentration wird über die Analyseeinrichtung 7, z. B. ein angeschlossenes IR-Spektrometer, überwacht. Nach Ablauf der gewünschten Einwirkzeit wird das Gas der Gasatmosphäre über die Adsorber 5 geleitet. Die Adsorber 5 haben einen Rauminhalt von 200 Liter und sind mit einer Schüttung aus schwefelimprägnierter Aktivkohle (mit 20 Gew.-% Schwefel) gefüllt. Das Gas wird mittels dem Gebläse 8 in den Begasungsraum 11 zurückgeführt. In Fig. 3 ist der Verlauf der Phosphinkonzentration C_{PH3} (in ppm) im Gasstrom ab Beginn des Gasumlaufes als Funktion der Zeit (Zeit t in Minuten) dargestellt. Man erkennt ein Absinken der Phosphinkonzentration im Gasstrom auf unter 20 ppm nach 60 Minuten und ein Absinken der Phosphinkonzentration unter die Nachweisgrenze nach etwa 65 Minuten.

## Patentansprüche

1. Verfahren zur Entfernung von Phosphin aus phosphinhaltigen Gasen, **dadurch gekennzeichnet, daß** mit Schwefel imprägnierte Aktivkohle mit dem phosphinhaltigen Gas in Kontakt gebracht wird.

2. Verfahren nach Anspruch 1, **dadurch gekennzeichnet, daß** die mit Schwefel imprägnierte Aktivkohle 1 bis 25 Gew.-% Schwefel enthält.

3. Verfahren nach Anspruch 1 oder 2, **dadurch gekennzeichnet, daß** das Gas durch mindestens einen Adsorber (5) geleitet wird, der mit Schwefel imprägnierte Aktivkohle enthält.

4. Verfahren nach einem der Ansprüche 1 bis 3, **dadurch gekennzeichnet, daß** das Gas durch einen oder mehrere Adsorber (5) geleitet und dann in eine Begasungskammer (11) zurückgeführt wird.

5. Vorrichtung zur Begasung von durch Schädlinge befallenen Gütern mit phosphinhaltigen Gasen, enthaltend eine Begasungskammer (11), **dadurch gekennzeichnet, daß** die Vorrichtung eine Einrichtung (5) zur Reinigung der Abluft enthält, die mit Schwefel imprägnierte Aktivkohle enthält.

6. Verwendung eines Filters oder Adsorbers zur Entfernung von Phosphin aus phosphinhaltigen Gasen, **dadurch gekennzeichnet, daß** der Filter oder Adsorber mit Schwefel imprägnierte Aktivkohle enthält.

7. Verwendung nach Anspruch 6, **dadurch gekennzeichnet, daß** der Filter bei einem Verfahren zur Begasung von Schädlingen eingesetzt wird.

8. Verwendung nach Anspruch 6, **dadurch gekennzeichnet, daß** der Filter bei der Abluftreinigung eingesetzt wird.

9. Verwendung von mit Schwefel imprägnierter Aktivkohle zur Entfernung von Phosphin aus phosphinhaltigen Gasen.

## Claims

1. Process for removing phosphine from phosphine-containing gases, **characterized in that** sulphur-impregnated activated carbon is brought into contact with the phosphine-containing gas.

2. Process according to Claim 1, **characterized in that** the sulphur-impregnated activated carbon contains 1 to 25% by weight of sulphur.

3. Process according to Claim 1 or 2, **characterized in that** the gas is passed through at least one adsorber (5) which contains sulphur-impregnated activated carbon.

4. Process according to one of Claims 1 to 3, **characterized in that** the gas is passed through one or more adsorbers (5) and is then returned to a gassing chamber (11).

5. Device for gassing goods which are contaminated by pests using phosphine-containing gases, including a gassing chamber (11), **characterized in that** the device includes a means (5) for cleaning the outgoing air, which includes sulphur-impregnated activated carbon.

6. Use of a filter or adsorber for removing phosphine from phosphine-containing gases, **characterized in that** the filter or adsorber contains sulphur-impregnated activated carbon.

7. Use according to Claim 6, **characterized in that** the filter is used in a process for gassing pests.

8. Use according to Claim 6, **characterized in that** the filter is used for outgoing-air cleaning.

9. Use of sulphur-impregnated activated carbon for removing phosphine from phosphine-containing gases.

## Revendications

1. Procédé pour éliminer la phosphine de gaz contenant de la phosphine,
**caractérisé en ce qu'**
on met le gaz contenant de la phosphine en contact avec du charbon actif imprégné de soufre.

2. Procédé selon la revendication 1.
**caractérisé en ce que**
le charbon actif imprégné de soufre contient entre 1 et 25 % en poids de soufre.

3. Procédé selon la revendication 1 ou 2,
**caractérisé en ce qu'**
on fait passer le gaz à travers au moins un adsorbeur (5) contenant du charbon actif imprégné de soufre.

4. Procédé selon l'une des revendications 1 à 3,
**caractérisé en ce qu'**
on conduit le gaz à travers un ou plusieurs adsorbeurs (5) et ensuite on le réintroduit dans une chambre de gazage (11).

5. Dispositif de gazage de produits encombrés de parasites avec des gaz contenant de la phosphine, comprenant une chambre de gazage (11),
**caractérisé en ce que**
le dispositif comporte une installation (5) pour nettoyer l'air évacué, cette installation contenant du charbon actif imprégné de soufre.

6. Application d'un filtre ou d'un adsorbant pour éliminer la phosphine de gaz contenant de la phosphine,
**caractérisée en ce que**
le filtre ou l'adsorbant contiennent du charbon actif imprégnés de soufre.

7. Application selon la revendication 6,
**caractérisée en ce que**
le filtre est utilisé dans le cas d'un procédé de gazage de parasites.

8. Application selon la revendication 6,
**caractérisée en ce que**
le filtre est utilisé pour le nettoyage de l'air évacué.

9. Application de charbon actif imprégné de soufre pour éliminer la phosphine de gaz contenant de la phosphine.
